(19) Europäisches Patentamt
European Patent Office
Office européen des brevets

(11) EP 2 487 743 B1

(12) **EUROPEAN PATENT SPECIFICATION**

(45) Date of publication and mention of the grant of the patent:
**02.08.2017 Bulletin 2017/31**

(21) Application number: **12154633.7**

(22) Date of filing: **09.02.2012**

(51) Int Cl.:
***H01M 8/0612*** *(2016.01)* ***H01M 8/0662*** *(2016.01)*
***H01M 8/04089*** *(2016.01)* ***H01M 8/0432*** *(2016.01)*
***H01M 8/0438*** *(2016.01)* ***H01M 8/04492*** *(2016.01)*
***B01D 53/48*** *(2006.01)* ***C10G 25/00*** *(2006.01)*

(54) **Fuel cell system**

Brennstoffzellensystem

Système de pile à combustible

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2011 JP 2011026647**

(43) Date of publication of application:
**15.08.2012 Bulletin 2012/33**

(73) Proprietor: **Aisin Seiki Kabushiki Kaisha**
**Aichi 448-8650 (JP)**

(72) Inventors:
- **Ohkawara, Hiroki**
  **Kariya-shi, Aichi 448-8650 (JP)**
- **Iwata, Shin**
  **Osaka-shi, Osaka (JP)**
- **Yasuhara, Kenichiro**
  **Osaka-shi, Osaka (JP)**
- **Takami, Susumu**
  **Osaka-shi, Osaka (JP)**

(74) Representative: **TBK**
**Bavariaring 4-6**
**80336 München (DE)**

(56) References cited:
**EP-A2- 0 279 116**
**EP-A2- 0 332 324**
**JP-A- 2009 181 699**
**JP-A- 2009 266 611**
**JP-A- 2010 260 772**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

This disclosure generally relates to a fuel cell system. More particularly, the disclosure pertains to a fuel cell system which includes a desulfurizer for desulfurizing source gas.

### BACKGROUND DISCUSSION

Known fuel cell systems are disclosed in JP2003-109640A, JP2006-111766A, JP2006-265480A. The known fuel cell system includes a reformer for forming anode gas which is formed by reforming source gas to include hydrogen, a fuel cell which includes an anode to which the anode gas is supplied and a cathode to which the cathode gas is supplied, a source gas passage for supplying the source gas to the reformer, and a desulfurizer provided at the source gas passage and desulfurizing the source gas.

A life span of a desulfurizer needs to be extended. For the purpose of extending the life span of the desulfurizer, according to a known method, passages are diverged so that a reformed fuel is supplied to the desulfurizer and a combustion fuel which does not affect the deterioration of catalyst, that is, a combustion fuel which is supplied to a combustor is not supplied to the desulfurizer. According to the foregoing construction, however, the water vapor included in the source gas to be supplied to the desulfurizer cannot be stopped from being supplied to the desulfurizer. Generally, because a dew point of the source gas is at low temperature, for example, minus 30 degrees Celsius, a volume of water vapor to be produced is small, which is not significant and does not cause a problem. However, in a case where the fuel cell system is operated for many hours, liquid may enter into a gas piping due to plumbing for gas piping or deterioration of the gas piping. In those circumstances, the amount of the water vapor included in the source gas which enters into the desulfurizer is increased, and a desulfurization agent may be deteriorated by means of the water vapor included in the source gas. Because whether the desulfurization agent is reformed cannot be detected by the known fuel cell system, the source gas is continued to be supplied to the desulfurizer without removing an odorant included in the source gas, thus a deterioration of a reformer and a fuel cell may occur.

A need thus exists for a fuel cell system which is advantageous for detecting a flowing volume of water vapor included in a source gas which flows into a desulfurizer and advantageous for restraining a deterioration of a reformer and a fuel cell.

JP 2010-260772 A provides a fuel cell system, which includes a reformer for forming an anode gas, which includes hydrogen, by reforming a source gas, a fuel cell including an anode to which the anode gas is supplied and a cathode to which a cathode gas is supplied, a source gas passage for supplying the source gas to the reformer, a desulfurizer provided at the source gas passage for removing sulfur component included in the source gas, and a humidity and temperature sensor provided at the source gas passage for detecting a physical quantity in association with a temperature and a humidity of the source gas to be supplied to the desulfurizer.

### SUMMARY

According to an aspect of the disclosure, there is provided a fuel cell system as defined in claim 1. The fuel cell system includes a valve box forming a valve housing chamber covering a shut-off valve for closing the source gas passage, the valve box being provided within the case. The humidity and temperature sensor is housed in the valve housing chamber of the valve box so as not to be affected by the temperature of the reformer and/or the fuel cell.

According to the construction of the disclosure, the humidity and temperature sensor detects the physical quantity in association with the temperature and humidity of the source gas which is to be supplied to the desulfurizer via the source gas passage. The physical quantity may be, for example, an electrostatic capacitance, an electrical resistance, or a magnetic permeability. The humidity may be a relative humidity or an absolute humidity. Thus, the water vapor volume included in the source gas is assumed to be detectable on the basis of the temperature and humidity of the source gas detected by the humidity and temperature sensor. In consequence, the water vapor volume which flows into the desulfurizer from the source gas is assumed to be detectable, and the volume of the desulfurization agent deteriorated by the water vapor is assumed to be detectable. Accordingly, the lifetime (the duration of life) of the desulfurization agent of the desulfurizer can be judged and the replacement of the desulfurization agent can be requested. The definition of the replacement includes the regeneration.

According to the construction of the disclosure, in those circumstances, the humidity and temperature sensor is provided at the position which is unlikely to be affected by the temperature of the reformer and/or the temperature of the fuel cell within the case for housing the reformer, the fuel cell, and the desulfurizer. Thus, detection accuracy of the humidity and temperature sensor is enhanced, thus enhancing the precision for calculating the lifetime of the desulfurizer. That is, even if the absolute volume of the water vapor included in the source gas is the same, when the temperature of the source gas is increased, the relative humidity of the source gas declines, and thus the tolerance of water vapor volume increases and the precision for detecting the water vapor volume by the humidity and temperature sensor declines. To the contrary, even if the absolute volume of the water vapor included in the source gas is the same, when the temperature of the source gas declines, the relative humidity of the source gas inclines, thus reducing the tolerance of water vapor volume and enhancing the precision for detecting the water vapor volume by the humidity and temperature sensor. In those circumstances, the humidity and temperature sensor is provided in the valve housing chamber of the valve box so that the humidity and temperature sensor are unlikely affected by the temperature of the reformer and/or the temperature of the fuel cell to avoid the increase of the temperature of the humidity and temperature sensor as much as possible.

According to another aspect of the disclosure, the fuel cell system further includes a flow volume sensor detecting a flow volume of the source gas which flows through the source gas passage, and a control portion. The control portion outputs the information regarding a maintenance of the desulfurizer on the basis of the physical quantity in association with the temperature and the humidity of the source gas detected by the humidity and temperature sensor and a cumulative flow volume of the source gas flowing into the desulfurizer after a reference timing.

According to the disclosure, the control portion is configured to calculate the lifetime of the desulfurizer on the basis of a physical quantity in association with the temperature and humidity of the source gas detected by the humidity and temperature sensor and a cumulative flow volume of the source gas which flows into the desulfurizer after the reference timing, and thus to output the information regarding the maintenance of the desulfurizer. The maintenance corresponds to the replacement of the desulfurization agent. The replacement includes the regeneration. The reference timing corresponds to a timing at which the source gas is started to be supplied to the desulfurization agent of the desulfurizer which is substantially new. For example, a timing at which the fuel cell system is provided at an installation location and a timing at which the desulfurizer is replaced (i.e., including the regeneration) correspond to the reference timing.

According to the fuel cell system of the disclosure, the humidity and temperature sensor detects the physical quantity which is related to the humidity and temperature of the source gas which is supplied to the reformer via the source gas passage. Thus, the water vapor volume which flows Into the desulfurizer from the source gas is assumed to be detectable, and the volume of the desulfurizer which is deteriorated by the water vapor is assumed to be detectable. In consequence, the lifetime of the desulfurizer can be judged and the replacement of the desulfurization agent can be requested.

## BRIEF DESCRIPTION OF THE DRAWINGS

The foregoing and additional features and characteristics of this disclosure will become more apparent from the following detailed description considered with the reference to the accompanying drawings, wherein:

- Fig. 1 is an overview of a fuel cell system according to a first embodiment disclosed here;
- Fig. 2 is a graph showing a saturated vapor pressure curve;
- Fig. 3 is a graph showing characteristics of a tolerance of water vapor volume;
- Fig. 4 is an overview of a fuel cell system according to a second embodiment disclosed here;
- Fig. 5 is a flowchart showing an example of a control executed by a control portion according to a fourth embodiment disclosed here;
- Fig. 6 is a flowchart showing another example of a control executed by the control portion according to a fifth embodiment disclosed here;
- Fig. 7 is a perspective view of an electric power generating module to which a desulfurizer is mounted according to a sixth embodiment disclosed here;
- Fig. 8 is a graph showing characteristics of an electrostatic capacitive humidity and temperature sensor according to a seventh embodiment disclosed here; and
- Fig. 9 is an overview of a fuel cell system according to the embodiments.

## DETAILED DESCRIPTION

Embodiments of a fuel cell system will be explained with reference to illustrations of drawing figures as follows.

A first embodiment will be explained referring to Fig. 1. The fuel cell system includes a fuel cell 1 which includes an anode 10 and a cathode 11, a cathode gas passage 70 for supplying a cathode gas (i.e., a gas including oxygen, for example, from air), a reformer 2A generating an anode gas (i.e., gas including hydrogen or hydrogen gas) by reforming a source gas (source fuel gas), a source gas passage 6 including a pump 60 serving as a gas conveying source for supplying the desulfurized source gas to the reformer 2A, an anode gas passage 73 for supplying the anode gas generated at the reformer 2A to the anode 10 of the fuel cell 1, and a thermal insulation wall 19 which houses the anode gas passage 73, the reformer 2A, and the fuel cell 1. An electric power generating module 18 includes the reformer 2A, the fuel cell 1, and the thermal insulation wall 19. A water supply passage 8 for supplying the water or the water vapor for reforming is connected to the reformer 2A.

As shown in Fig. 1, the source gas passage 6 is provided with a shut-off valve 69, a humidity and temperature sensor 510 serving as a dew indicator, the pump 60 serving as the gas conveying source, a flow volume sensor 300 measuring the flowing volume of the source gas (source fuel gas), a desulfurizer 200 for accommodating the desulfurization agent, and a check valve 500. The desulfurizer 200 contains the desulfurization agent. The desulfurizer 200 Is positioned in the environment having a relatively low temperature (i.e., generally, 0 degrees Celsius to 50 degrees Celsius) and is arranged at the position being away from the electric power generating module 18 in order to reduce the affects of the heat received from the electric power generating module 18 which has a high temperature. The position of the desulfurizer 200 is not limited, and depending on the situations, the desulfurizer 200 may be positioned in contact with or closer to an external wall surface of the electric power generating module 18 which has the high temperature and may be arranged in the environment having a relatively high temperature (i.e., generally, equal to or higher than 50 degrees Celsius). Materials which include a relatively large specific surface area, for example, porous material such as zeolite or activated carbon may be applied as the desulfurizer. Alternatively, zeolite may include metal component, for example, silver, iron, or nickel. The shut-off valve 69 serves as an opening-closing valve for opening and closing an upstream portion of the source gas passage 6 located at an upstream of a flow. As shown in Fig. 1, a case 5 is provided for housing the reformer 2A, the fuel cell 1, the source gas passage 6, and the desulfurizer 200. The case 5 includes an inlet port 50 and an exhaust port 51. An outside of the case 5 is exposed to an outer atmosphere.

The humidity and temperature sensor 510 is provided at the position In which the humidity and temperature sensor 510 is unlikely to be influenced by the temperature of the reformer 2A and the fuel cell 1 in the case 5. More particularly, the humidity and temperature sensor 510 is positioned at an upstream on the source gas passage 6 within the case 5. In a case where the length of a range of the source gas passage 6 from the shut-off valve 69 to an inlet 18i of the electric power generating module 18 is defined as 100, the humidity and temperature sensor 510 may be positioned within a range at a length of 0.1 to 40 from the shut-off valve 69 towards a downstream of the flow, or within a range at a length of 0.2 to 30 from the shut-off valve 69 towards a downstream of the flow. Thus, the humidity and temperature sensor 510 is positioned at an upstream on the source gas passage 6 relative to the desulfurizer 200, the flow volume sensor 300, and the pump 60. According to the construction explained above, the temperature of the humidity and temperature sensor 510 is closer to the temperature of the outside air temperature outside of the case 5. It is assumed that the temperature in the case 5 is increased to approximately 50 degrees to 70 degrees Celsius because of the heat generated by auxiliary devices and of the influence of an electric power generating operation by the fuel cell 1. However, the temperature of the humidity and temperature sensor 510 is maintained to the relatively low temperature according to the foregoing construction. A signal of the humidity and temperature sensor 510 is inputted to a control portion 100X. The control portion 100X includes a memory function and a timer function.

As illustrated in Fig. 1, a valve box 580 for forming a valve housing chamber 582 which covers the shut-off valve 69 is provided within the case 5. The valve box 580 includes wall members 581. The wall members 581 may be made from a metal plate or may be made from a thermal insulation material which includes low heat conductivity. As described above, the humidity and temperature sensor 510 is accommodated at a downstream position on the source gas passage 6 relative to the shut-off valve 69 within the valve housing chamber 582 of the valve box 580. Consequently, the humidity and temperature sensor 510 is provided at a position which is unlikely to be influenced by the temperature of the fuel cell 1 so that the temperature of the humidity and temperature sensor 510 is maintained at a relatively low temperature. According to the foregoing construction, a detection accuracy of the temperature and the humidity by the humidity and temperature sensor 510 is enhanced. As a result, a volume of the water vapor flowing into the desulfurizer 200 from the source gas (source fuel gas) Is assumed to be accurately detectable, and a level of the deterioration of the desulfurization agent by the water vapor is assumed to be detectable with high precision. Accordingly, a determination of a life span of the desulfurizer 200 and a precision of a command for informing that a replacement of the desulfurization agent of the desulfurizer 200 is desired is enhanced. In those circumstances, when the temperature of the air in the case 5 is increased, the air rises upward to an upper space in the case 5. Thus, the valve box 580 is provided at a bottom portion 5b of the case 5 so that the temperature of the valve box 580 is not increased. Accordingly, the humidity and temperature sensor 510 provided in the valve box 580 is devised so that the temperature is not increased as much as possible. The valve housing chamber 582 may be formed as a sealed chamber so that, for example, a gas sensor enables to detect a leakage of the gas at early stage by restraining the leaked gas from being rarified in a case where the source gas is leaked from the shut-off valve 69. With the construction that the valve housing chamber 582 is the sealed chamber, an increase of the temperature of the humidity and temperature sensor 510 provided in the valve housing chamber 582 of the valve box 580 is restrained. The gas sensor may be positioned in the valve housing chamber 582.

Fig. 2 shows a saturated vapor pressure curve which shows a relationship between the temperature and the saturated vapor fraction. A relative humidity (%RH), for example, 50%RH when the temperature is at 60 degrees Celsius is shown In Fig. 2. Fig. 3 shows a tolerance of the absolute volume of the water vapor in a case where the source gas whose dew point is at 20 degrees Celsius includes water vapor provided that the precision of the relative humidity is plus /minus 5% (±5%). As shown in Fig. 3, even if the absolute volume of water vapor in the source gas is the same, the detection precision of the quantity of water vapor by the humidity and temperature sensor 510 declines because the tolerance of the absolute volume of water vapor is increased when the temperature of the source gas increases. To the contrary even if the absolute volume of the water vapor In the source gas is the same, as shown in Fig. 3, the detection precision of the volume of the water vapor by the humidity and temperature sensor 510 is enhanced because the relative humidity of the source gas relatively increases and the tolerance of the absolute quantity of the water included in the source gas decreases when the temperature of the source gas decreases. Thus, in a case where the temperature of the source gas is equal to or less than 30 degrees Celsius, or particularly, equal to or less than 20 degrees Celsius, the tolerance of the absolute volume of the water vapor is stably reduced. In consequence, the lower temperature of the source gas is, the higher the detection precision by the humidity and temperature sensor 510 becomes. Thus, a precision for estimating the remaining lifetime of the desulfurizer 200 can be enhanced using the humidity and temperature sensor 510. Considering the foregoing fact, according to the construction of the embodiment, the humidity and temperature sensor 510 for detecting the humidity and temperature of the source gas, thus detecting the water vapor quantity is arranged at a position which is insusceptible to be affected by the temperature of the reformer 2A and the fuel cell 1 in the case 5, that is, at a position at which the temperature is assumed to be as low as possible in the case 5.

As explained above, by positioning the humidity and temperature sensor 510 at the position which is which is insusceptible to be affected by the temperature of the reformer 2A and/or the fuel cell 1, the detection precision of the volume of the water vapor by the humidity and temperature sensor 510 is enhanced, and thus enhancing the precision for estimating the remaining lifetime of the desulfurization agent in the desulfurizer 200. Accordingly, the humidity and temperature sensor 510 is arranged so that the temperature of the humidity and temperature sensor 510 is assumed to be as low as possible. Consequently, the detection precision of the humidity and temperature sensor 510 is enhanced, and thus enhancing the precision for estimating the remaining lifetime of the desulfurization agent of the desulfurizer 200. The pump 60 may be heated when actuated, however, the pump 60 is configured to pump the source gas to the downstream. Because the humidity and temperature sensor 510 is positioned at the upstream of the pump 60, the humidity and temperature sensor 510 is unlikely to be affected by the heat of the pump 60. There is a possibility that a methane group of the source gas is adsorbed or desorbed relative to the desulfurization agent depending on the material of the desulfurization agent of the desulfurizer 200. As shown in Fig. 1, even in those circumstances, because the flow volume sensor 300 is positioned at the upstream of the desulfurizer 200, the flow volume sensor 300 is restrained from receiving the influence of the adsorption and desorption of the methane group of the source gas relative to the desulfurization agent in the desulfurizer 200, and the detection precision of the flow volume sensor 300 is ensured. The position of the flow volume sensor 300 is not limited, and the flow volume sensor 300 may be positioned at the downstream of the desulfurizer 200.

A second embodiment will be explained with reference to Fig. 4 as follows. Basic constructions of the fuel cell system according to the second embodiment are similar to the first embodiment, and similar effects and advantages can be attained. As shown in Fig. 4, a moisture absorbing agent 900 is provided on the source gas passage 6 between the shut-off valve 69 and the desulfurizer 200. By positioning the moisture absorbing agent 900 at the upstream of the desulfurizer 200 on the source gas passage 6, the moisture absorbing agent 900 effectively absorbs the water vapor which temporally enters, for example, due to the water entering the gas piping during the plumbing construction of the gas piping. Thus, according to the construction of the embodiment, the design lifetime of the desulfurizer 200 is ensured, and thus ensuring the design lifetime of the fuel cell system. In those circumstances, a porous material, for example, activated carbon or silica gel may be applied as the moisture absorbing agent 900.

A third embodiment will be explained with reference to Figs. 1 to 4. Basic constructions of the third embodiment are the same with the first to second embodiments, and similar effects and advantages to the first to second embodiments can be attained. The control portion 100X calculates the remaining lifetime of the desulfurizer 200 on the basis of a physical quantity in association with the temperature and the humidity of the source gas detected by the humidity and temperature sensor 510 and a cumulative flow volume (accumulated flow volume) of the source gas flowed into the desulfurizer 200 from a reference timing, and thus announcing the information regarding a maintenance (replacement) of the desulfurization agent of the desulfurizer 200. Procedures and operations executed by the control portion 100X will be explained as follows. The control portion 100X is configured to calculate a cumulative volume (accumulated volume) of the water vapor which is to be flowing into the desulfurization agent on the basis of the temperature and humidity of the source gas, which is detected by the humidity and temperature sensor 510 and a flow volume of the source gas per unit time to be supplied to the desulfurizer 200, which is detected by the flow volume sensor 300. In those circumstances, the control portion 100X can calculate the cumulative volume of the water vapor flow which is supplied to the desulfurizer 200 by the source gas from the reference timing. The reference timing corresponds to an installation timing of a brand-new fuel cell system, or corresponds to a timing which a replacement to a new desulfurizer is completed in a case where the desulfurizer is replaced. The definition of the replacement includes a regeneration treatment.

As described above, according to the construction of the embodiment, the control portion 100X can calculate an amount of the desulfurization agent which deteriorates due to the water vapor among the desulfurization agent in the desulfurizer 200, an amount of the desulfurization agent which has not yet deteriorated by the water vapor among the desulfurization agent of the desulfurizer 200, and a total amount of the source gas which is to be desulfurized by the non-deteriorated desulfurization agent thereafter (as of current timing) on the basis of the cumulative volume of water vapor generated from the reference timing to the current timing. When the total amount of the source gas which is to be desulfurized by the desulfurization agent as of current timing is assumed to be equal to or less than a predetermined volume, the control portion 100X determines that the remaining lifetime of the desulfurization of the desulfurizer 200 is short, and outputs an alarm to inform of the necessary replacement of the desulfurization agent. In those circumstances, the alarm may include at least one of outputting an alarming signal for urging the replacement of the desulfurization agent to an alarm 102, immediately stopping the fuel cell system, and stopping the fuel cell system after an elapse of a predetermined time. In those circumstances, the remaining lifetime of the desulfurization agent may be kept to some extent as a backup even when the control portion 100X judges that there is no lifetime of the desulfurization agent left. The alarm may be a visual alarm, an auditory alarm, and an alarm by stopping or intercepting an operation of the fuel cell system. When the desulfurization agent is replaced by, for example, a user or a person in charge of maintenance, the control portion 100X resets the reference timing, resets the cumulative volume of the water vapor to zero (0), resets the total amount of the source gas which is to be desulfurized to zero (0), and restarts an operation.

According to the embodiment, the remaining lifetime of the desulfurization agent can be judged considering the deteriorated amount of the desulfurization agent by the water vapor and the used amount of the desulfurization agent. Thus, by replacing the desulfurization agent (including regeneration treatment), a drawback that the sulfur component included in an odorant of the source gas is not desulfurized by the desulfurization agent is restrained. In consequence, the sulfur component included in the source gas is restrained from being flowed into the reformer 2A provided at the downstream of the desulfurization agent (the desulfurizer 200). Accordingly, deterioration of the reformer 2A and the fuel cell 1 can be restrained.

According to the embodiment, the number of years that the desulfurization capacity is maintained TMa (i.e., corresponding to the remaining lifetime of the desulfurization agent; the number of years to be operated at a rated load) of the desulfurization agent of the desulfurizer 200 when the fuel cell system is operated at rated power (i.e., the flowing volume of the source gas is maximized) on the basis of the total amount of the source gas which is to be desulfurized as of current timing calculated in the foregoing manner. Whether the desulfurization agent of the desulfurizer 200 can maintain the desulfurization capacity until the next maintenance is judged. Namely, whether the lifetime of the desulfurization agent of the desulfurizer 200 is sufficient until the next maintenance is judged at the current maintenance timing. Thus, according to the construction of the embodiment, whether the desulfurization agent of the desulfurizer 200 should be replaced is judged at the current maintenance opportunity of the fuel cell system. According to the foregoing construction, a burden to replace the desulfurization agent at a timing other than the maintenance timing is not necessary, and thus reducing a burden of the user. Further, according to the construction of the embodiment, an average power generation load (i.e., average flow volume of the source gas) of the fuel system and an average flow volume of the source gas until the next maintenance is calculated and the number of years that the desulfurization capacity is maintained TMa (i.e., corresponding to the remaining lifetime of the desulfurization agent) of the desulfurization agent of the desulfurizer 200 can be calculated on the basis of the average power generation load and the average flow volume of the source gas. Further, according to the embodiment, whether the desulfurization agent can maintain the desulfurization capacity until the next maintenance is judged to determine whether the desulfurization agent is replaced at the current maintenance timing.

A fourth embodiment will be explained as follows. Basic constructions of the fourth embodiment are the same with the first to third embodiments, and similar effects and advantages are attained. A specification of the desulfurizer 200 and the desulfurization agent will be shown as follows. An amount of the desulfurization agent of the desulfurizer 200 is defined as A [L], which corresponds to the volume of the desulfurization agent for 10 years lifetime. A total amount of the source gas which is capable of being desufurized by the desulfurization agent of the desulfurizer 200 (dew point of minus 15 degrees Celsius) is defined as F [MNL]. A volume of the source gas which cannot be desulfurized by water vapor (per 1 kilogram of water) which flows into the desulfurization agent of the desulfurizer 200 (i.e., corresponding to the deterioration amount of the desulfurization agent which is deteriorated per 1 kilogram of water) is defined as $\Delta FO$ [MNL/kg]. The remaining lifetime of the desulfurization agent of the desulfurizer 200 is calculated on the basis of a first example for the control.

A flowchart shown in Fig. 5 starts upon an activation of the fuel cell system. (i) The control portion 100X measures the flow volume [NL/min] of the source gas per unit time, which flows in the source gas passage 6 on the basis of the detection by the flow volume sensor 300 for detecting the flow volume of the source gas. The measured flow volume [NL/min] of the source gas per unit time is stored in a memory area of the control portion 100X. The control portion 100X measures the relative humidity [%RH] of the source gas and the temperature [°C] of the source gas by the humidity and temperature sensor 510. The measured relative humidity [%RH] and the temperature [°C] of the source gas are stored in the memory area of the control portion 100X. (ii) The control portion 100X calculates the cumulative volume [kg/min] of the water which flows into the desulfurization agent of the desulfurizer 200 from the reference timing to the current timing. The cumulative volume [kg/min] of the water is stored in the memory area of the control portion 100X. In those circumstances, the volume of the water which flows into the desulfurization agent is calculated on the basis of the following formula: (Water volume which flows into desulfurization agent) = (flow volume of source gas) · (water vapor fraction) / (1-water vapor fraction)
Here, (water vapor fraction) = (saturated water vapor fraction relative to the temperature of source gas) · (relative humidity)

(iii) As explained above in items (i), (ii), the control portion 100X calculates the cumulative volume Fa [MNL] of the source gas which flows to the desulfurization agent from the reference timing to the current timing and the cumulative volume Wa [kg] of the water which flows into the desulfurization agent from the reference timing to the current timing, and the calculated cumulative volume Fa [MNL] of the source gas and the cumulative volume Wa[kg] of the water are stored in the memory of the control portion 100X. In those circumstances, the reference timing corresponds to an installation timing of a brand-new fuel cell system. Alternatively, in a case where the desulfurizer Is replaced, the reference timing corresponds to the timing of the completion of the replacement of the desulfurizer to a new desulfurizer. The definition of the replacement includes regeneration treatment. (iv) The control portion 100X reads in the cumulative volume Wa [kg] of the water which flows into the desulfurization agent from the reference timing to the current timing from the memory (Step S102). The control portion 100X reads in the cumulative volume Fa [MNL] of the source gas which flows to the desulfurization agent from the reference timing to the current timing from the memory (Step S104).
The control portion 100X calculates a volume Da of the source gas which is to be desulfurized as of current timing (Step S106). In those circumstances, the volume Da[MNL] of the source gas which is to be desulfurized as of current timing is calculated on the basis of the following formula.

formula. $$Da\ [MNL] = F\ [MNL] - (\Delta FO\ [MNL/kg] \cdot Wa\ [kg]) - Fa\ [MNL]$$

Here, volume Da = (volume of desulfurization agent contained in the desulfurizer 200, that is, the volume of the source gas which the desulfurization agent can originally desulfurize) - (volume of the desulfurization agent which is deteriorated by the water included in the source gas, which is converted to the volume of the source gas) - (volume of the source gas desulfurized by the desulfurization agent from reference timing to the current timing)
That is, Da = (cumulative volume of source gas by originally loaded agent - volume of source gas which is otherwise desulfurized by deteriorated agent - volume of source gas which has already desulfurized)

(v) Provided that the source gas is used in a rated load (maximum load) of the fuel cell system from the current timing, a volume of source gas fa to be consumed provided that source gas is used in the rated load is obtained, and the remaining lifetime TMa of the desulfurization agent is calculated on the basis of the following formula (Step S108) on the basis of the volume of sources fa to be consumed provided that source gas is used in the rated load: TMa = Da / fa
(vi) The remaining lifetime TMa and a predetermined time TMb are compared (Step S110). When the remaining lifetime TMa Is equal to or longer than the predetermined time TMb (YES at Step S110), the control portion 100X outputs a command signal to continue the operation of the fuel cell system (Step S120) because the remaining lifetime Tma is adequate. However, when the remaining lifetime TMa is shorter than the predetermined time TMb (NO at step S110), the control portion 100X outputs a signal to the alarm 102 for informing that a replacement of the desulfurization agent of the desulfurizer 200 is desired, and commands the replacement of the desulfurization agent (Step S112). In those circumstances, preferably, an operation of the fuel cell system is prohibited until the replacement of the desulfurization agent is completed. When the desulfurization agent of the desulfurizer 200 is not replaced (NO at Step S114), the control portion 100X continuously outputs the alarm for commanding the replacement of the desulfurization agent to the alarm 102. (vii) When the desulfurization agent of the desulfurizer 200 is replaced with a new desulfurization agent (YES at Step S114), a signal indicating that the desulfurization agent has been replaced is inputted to the control portion 100X either automatically or by means of an operation of the user/the person in charge of replacement. Upon receiving the signal, the control portion 100X resets the reference timing, resets the cumulative volume of the source gas to zero (0), resets the cumulative volume of the water which flows into the desulfurization agent to zero (0) (Step S116), and returns to a main routine. According to the foregoing control, the control portion 100X continuously calculates the remaining lifetime TMa of the desulfurization agent, and outputs the signal to the alarm 102 when the remaining lifetime TMa of the desulfurization agent reaches an end or is assumed to be close to an end to inform of the necessity of the replacement of the desulfurization agent. However, in a case where a timing of maintenance for the fuel cell system is predetermined, the control method is not limited to the foregoing, and a second example for the control as follows may be applied. According to the second example, whether the desulfurization agent of the desulfurizer 200 is replaced is judged.

A fifth embodiment will be explained with reference to Fig. 6. Basic constructions of the fifth embodiment is the same with the constructions of the first to third embodiments, and similar advantages and effects can be attained.

The second control example for the control is similar to the first control 1. That is, the control portion 100X reads in a cumulative volume Wa [kg] of the water which flows into the desulfurization agent from the reference timing to the current timing from the memory (Step S202). The control portion 100X reads in a cumulative volume Fa [MNL] of the source gas which flows to the desulfurization agent from the reference timing to the current timing from the memory (Step S204). The control portion 100X calculates a volume Da of the source gas which is to be desulfurized as of current timing (Step S206). In those circumstances, the volume Da [MNL] of the source gas which is to be desulfurized as of current timing is calculated on the basis of the following formula.

$$Da\ [MNL] = F\ [MNL] - (\Delta FO\ [MNL/kg] \cdot Wa\ [kg]) - Fa\ [MNL]$$

Here, the volume Da = (the volume of a desulfurization agent contained in the desulfurizer 200, that Is, the volume of the source gas which the desulfurization agent can originally desulfurize) - (the volume of the desulfurization agent which is deteriorated by the water included in the source gas, which is converted to the volume of the source gas) - (the volume of the source gas desulfurized by the desulfurization agent from reference timing to the current timing)

That is, Da = (cumulative volume of source gas by originally loaded agent - volume of source gas which is otherwise desulfurized by deteriorated agent - volume of source gas which has already desulfurized)

(v) Considering the volume of the water which flows into the desulfurization agent of the desulfurizer 200 as the water vapor of the source gas, the remaining lifetime TMa of the desulfurization agent is calculated on the basis of the following formula according to the second example for the control. TMa = Da / (fa + volume of the source gas corresponding to the deteriorated source gas by the flowed water per unit time)

The volume of the water which flows to the desulfurization agent may be calculated on the basis of either the worst-case condition of the dew point of the source gas (e.g., dew point at 20 degrees Celsius) or an average dew point since the reference timing.

(vi) At the maintenance, the control portion 100X compares the remaining lifetime TMa of the desulfurization agent to the end of the life and a time TMc until the next maintenance (Step S210). When the remaining lifetime TMa is equal to or longer than the time TMc (YES at Step S210), the control portion 100X judges that the desulfurization agent of the desulfurizer 200 is sufficient until the next maintenance, and outputs a command signal to continuously operate the fuel cell system (Step S220). To the contrary when the remaining lifetime TMa is shorter than the time TMc, the control portion 100X judges that the desulfurization agent of the desulfurizer 200 will not last until the next maintenance, and outputs a signal to the alarm 102 so that the desulfurization agent of the desulfurizer 200 is replaced at the next maintenance (Step S212). The control portion 100X continues to output the signal to the alarm 102 for commanding the replacement of the desulfurization agent of the desulfurizer 200 until the desulfurization agent is replaced (NO at Step S214). Upon the replacement of the desulfurization agent, a signal indicating that the desulfurization agent is replaced is inputted to the control portion 100X either automatically or by means of the operation of the user/person in charge of the replacement.

(vii) In accordance with the replacement of the desulfurization agent of the desulfurizer 200 (YES at Step S214), the control portion 100X resets the reference timing, resets the cumulative volume of the source gas to zero (0), resets the cumulative volume of the water which flows into the desulfurization agent to zero (0), and returns to the main routine. Alternatively, in order to enhance the precision for calculating the remaining lifetime of the desulfurization agent and to reduce, for example, maintenance costs, a third control example for the control may be executed as explained hereinafter.

The third control example for the control is similar to the second control example for the control. According to the third control example for the control, the remaining lifetime TMa fo the desulfurization agent can be calculated on the basis of the following formula. Here, an average flow volume of the source gas per unit time since the reference timing is defined as fb. TMa = Da / fb

According to the third control example for the control, in a case where the consumption of the electricity is greater and thus a greater volume of the source gas being consumed, the same control to the second control example for the control is executed. In a case where the consumption of the electricity is less and thus less volume of the source gas being consumed, the fuel cell system can be operated without replacing the desulfurization agent because the total volume of the source gas to be used within a time period of 10 years is smaller. Accordingly, an increase of the costs in accordance with the replacement of the desulfurization agent can be restrained.

A sixth embodiment will be explained with reference to Fig. 7. As shown in Fig. 7, in replace of the desulfurizer 200 which is for installing at normal temperature environment, a desulfurizer 100 which is for installing at high temperature environment is provided at a side surface 19s serving as a surface of the thermal insulation wall 19 of the power generating module 18 serving as a heating source by means of an attaching member. The desulfurizer 100 is in contact with the side surface 19s for transmitting the heat. Alternatively, the desulfurizer 100 may be attached to either a top surface or a bottom surface of the thermal insulation wall 19. A first desulfurization agent is contained in a desulfurization chamber 101 of the first desulfurizer 100. The first desulfurization agent may includes zeolite which is provided with metal component, for example, silver, nickel, or iron. The heat of the power generating module 18 is transmitted to the first desulfurizer 100 which is for installing at high temperature environment is transmitted by a direct heat transfer and radiation heat. As shown in Fig. 7, the desulfurization chamber 101 of the first desulfurizer 100 is walled by plural section walls 104m for forming plural openings 103m so that a passage for flowing the source gas is formed in a winding configuration. The source gas which is inputted via an inlet 101i flows following a winding passage defined by the section walls 104m, and is outputted to the reformer 2A via an outlet 101 p. Thus, a length of the passage for desulfurizing the source gas is ensured. A thickness tx of the first desulfurizer 100 may be thinner than a width ty of the power generating module 18 and the first desulfurizer 100 may have a flat box shape. According to the foregoing construction, a heat receiving area of the first desulfurizer 100 from the side surface 19s of the thermal insulation wall 19 of the power generating module 18 is increased, and thus being advantageous for reducing a variation in temperature of the first desulfurization agent contained in the first desulfurizer 100. For example, in a case where the fuel cell system is is not operated for a long term, the thermal insulation wall 19 of the power generating module 18 is not at the high temperature when activating the fuel cell system. Thus, as shown in Fig. 7, an electric heater 109 may be provided at an external wall surface of the first desulfurizer 100 which is for installing at high temperature environment. According to the foregoing construction, when the fuel cell system is activated, the first desulfurization agent of the first desulfurizer 100 which is for installing at high temperature environment Is heated by the electric heater 109 so that the temperature environment is set to be equal to or higher than 50 degrees Celsius. When the thermal insulation wall 19 of the power generating module 18 is assumed to reach a high temperature, the electric heater 109 is turned OFF. Alternatively, the electric heater 109 may not be provided depending on situations. However, providing an electric heater to the first desulfurizer 100 which is for installing at high temperature environment according to the embodiments is advantageous.

A seventh embodiment will be explained with reference to Fig. 8. Basic constructions of the seventh embodiment are the same with the first to sixth embodiments, and similar advantages and effects can be attained. The temperature, the humidity, and the dew point of the source gas can be measured in various manners. An electrostatic capacitive humidity and temperature sensor or a resistance humidity and temperature sensor may be applied as the humidity and temperature sensor 510. Particularly, the electrostatic capacitive humidity and temperature sensor may be applied. Fig. 8 shows characteristics of an electrostatic sensor. As shown in Fig. 8, because proportional characteristics from zero (0) degrees Celsius to 100 degrees Celsius are attained, a high detection precision can be attained.

Fig. 9 shows an overview of a first application of the fuel cell according to the embodiment. As shown in Fig. 9, the fuel cell system includes the fuel cell 1, an evaporating portion 2 for generating water vapor by evaporating the liquid-phase water, the reforming portion 3 for forming anode gas by reforming a fuel (source gas, source fuel gas) using the water vapor generated at the evaporating portion 2, a combusting portion 105 for heating the evaporating portion 2 and the reforming portion 3, a tank 4 for reserving the liquid-phase water which is to be supplied to the evaporating portion 2, and the case 5 for housing the fuel cell 1, the evaporating portion 2, the reforming portion 3, and the tank 4. The fuel cell 1 includes the anode 10 and the cathode 11 which sandwich an ion conductor therebetween. For example, a solid oxide fuel cell (SOFC) which is operated at a temperature, for example, equal to or greater than 400 degrees Celsius, may be applied to the fuel cell 1. An anode exhaust gas exhausted from the anode 10 is supplied to the combusting portion 105 via an anode gas exhaust passage 103. A cathode exhaust gas exhausted from the cathode 11 is supplied to the combusting portion 105 via a cathode gas exhaust passage 104. The combusting portion 105 combusts the anode exhaust gas and the cathode exhaust gas to heat the evaporating portion 2 and the reforming portion 3. The combusting portion 105 is provided with a combustion exhaust gas passage 75, and the combustion exhaust gas including the gas after combusted in the combusting portion 105 and the gas being not combusted is released to the atmosphere via the combustion exhaust gas passage 75. The reforming portion 3 is formed by supporting a reforming catalyst onto a carrier, for example, ceramics, and is provided adjacent to the evaporating portion 2. The reforming portion 3 and the evaporating portion 2 structures the reformer 2A, and are surrounded by the thermal insulation wall 19 together with the fuel cell 1 to form the electric power generating module 18. The combusting portion 105 for heating the reforming portion 3 and the evaporating portion 2 is provided in the power generating module 18. The anode exhaust gas exhausted from the anode 10 is supplied to the combusting portion 105 via the anode gas exhaust passage 103. The cathode exhaust gas exhausted from the cathode 11 is supplied to the combusting portion 105 via the cathode gas exhaust passage 104. During the power generating portion, the combusting portion 105 combusts the anode exhaust gas exhausted from the anode 10 by the cathode exhaust gas exhausted from the cathode 11 to heat the evaporating portion 2 and the reforming portion 3. The combustion exhaust gas passage 75 is provided at the combusting portion 105, and the combustion exhaust gas including the gas after combusting in the combusting portion 105 and the gas being not combusted is released to the atmosphere via the combustion exhaust gas passage 75. A thermal sensor 33 for detecting the temperature of the reforming portion 3 is provided. An ignition portion 35 serving as a heater for igniting the fuel is provided inside the combusting portion 105. Any construction is applicable as the ignition portion 35 as long as igniting the fuel in the reforming portion 3. A thermal sensor 57 for detecting the temperature of the outside air is provided. Signals from the thermal sensors 33, 57 are inputted into the control portion 100X. The control portion 100X is configured to output a signal to the alarm 102.

During the power generating operation of the fuel cell system, the reformer 2A is heated within the thermal insulation wall 19 to reach the appropriate temperature for the reforming reaction. During the power generating operation, the evaporating portion 2 is heated to evaporate the water. In a case where the solid oxide fuel cell (SOFC) is applied as the fuel cell 1, because the anode exhaust gas exhausted from the anode 10 and the cathode exhaust gas exhausted from the cathode 11 are combusted at the combusting portion 105, the reforming portion 3 and the evaporating portion 2 are simultaneously heated within the power generating module 18. As shown in Fig. 9, the source gas passage 6 is provided for supplying the source gas from a gas source 63 to the reformer 2A. The pump 60, the desulfurizer 200, the flow volume sensor 300, and the check valve 500 are provided at the source gas passage 6.

Fig. 9 shows an example of a layout of the fuel cell system. The desulfurizer 200 contains the desulfurization agent which includes a porous material of zeolite system as base material, and is positioned keeping a distance from the thermal insulation wall 19 of the power generating module 18 (the heat source). The cathode gas passage 70 for supplying the cathode gas (air) to the cathode 11 is provided at the cathode 11 of the fuel cell 1. A cathode pump 71 serving as a conveying source for conveying the cathode gas is provided at the cathode gas passage 70. As shown in Fig. 9, the case 5 includes the inlet port 50 and the exhaust port 51, and further includes an upper chamber space 52 serving as a first chamber and a lower chamber space 53 serving as a second chamber. The fuel cell 1 is housed in the upper side of the case 5, that is, in the upper chamber space 52 together with the reforming portion 3 and the evaporating portion 2. The tank 4 reserving the liquid-phase water to be reformed in the reforming portion 3 is housed in the lower chamber space 53 of the case 5. A heating portion 40 serving as a heater, for example, an electric heater, is provided at the tank 4. The heating portion 40 is configured to heat the water reserved In the tank 4, and is formed with, for example, an electric heater. For example, when the environmental temperature, for example, the outside air temperature is lower, the water reserved in the tank 4 is heated to be equal to or higher than a predetermined temperature on the basis of a command signal from the control portion 100X to restrain the water from freezing. As shown in Fig. 9, the water supply passage 8 which establishes the communication between an outlet port 4p of the tank 4 positioned at the lower chamber space 53 and an inlet port 2i of the evaporating portion 2 positioned at the upper chamber space 52 is provided in the case 5 and serves as a pipe. Because the tank 4 is arranged at a lower level compared to the evaporating portion 2 within the case 5, the water supply passage 8 basically extends in an upward-downward direction. As shown in Fig. 9, the water supply passage 8 is configured to supply the water reserved in the tank 4 to the evaporating portion 2 via the inlet port 2i. The water supply passage 8 is provided with a pump 80 serving as a water conveying source for carrying the water reserved in the tank 4 to the evaporating portion 2. The control portion 100X is provided for controlling the pumps 80, 71, 79, 60.

Upon the actuation of the pump 60 when the fuel cell system is activated, the source gas flows from the source gas passage 6 to be supplied to the combusting portion 105 via the evaporating portion 2, the reforming portion 3, the anode gas passage 73, the anode 10 of the fuel cell 1, and the anode gas exhaust passage 103. The cathode fluid (air) is pumped by the cathode pump 71 to flow into the combusting portion 105 via the cathode gas passage 70, the cathode 11, and the cathode gas exhaust passage 104. When the ignition portion 35 is ignited in those circumstances, the gas is combusted at the combusting portion 105, thus heating the reforming portion 3 and the evaporating portion 2. When the pump 80 is actuated in a state where the reforming portion 3 and the evaporating portion 2 are heated, the water in the tank 4 is conveyed in the water supply passage 8 from the outlet port 4p of the tank 4 to the inlet port 2i of the evaporating portion 2, and is heated to be evaporated. The water vapor rises to the reforming portion 3 together with the fuel supplied from the fuel passage 6. In those circumstances, preferably, the fuel may be in a gas-phase, however, alternatively, the fuel may be in a liquid-phase. At the reforming portion 3, the fuel (source gas) is reformed by means of the vaporized water to be the anode fluid (i.e., the gas including the hydrogen). The anode fluid (anode gas) is supplied to the anode 10 of the fuel cell 1 via the anode fluid passage 73. Further, the cathode fluid (i.e., the gas including the oxygen; the air in the case 5) is supplied to the cathode 11 of the fuel cell 1 via the cathode fluid passage 70. Thus, the fuel cell 1 generates the electricity. The exhaust gas of the anode fluid exhausts from the anode 10 and the exhaust gas of the cathode fluid exhausts from the cathode 11 flow through the passages 103, 104, respectively, and reach the combusting portion 105 to be combusted therein. The exhaust gas with high temperature is exhausted to the outside of the case 5 via the combustion exhaust gas passage 75.

Upon the actuation of the pump 80 during the power generating operation of the fuel cell system, the water in the tank 4 is conveyed from the outlet port 4p of the tank 4 to the inlet port 2i of the evaporating portion 2, and is heated at the evaporating portion 2 to be vaporized. The vaporized water rises to the reforming portion 3 together with the source gas supplied through the source gas passage 6. At the reforming portion 3, the fuel is reformed by the water vapor to be the anode gas (i.e., the gas including hydrogen). In a case where methane system gas is applied as the fuel, the anode gas is generated by the steam reforming on the basis of the following formula (1). In those circumstances, the fuel is not limited to the methane system gas.

(1) $$CH_4 + 2H_2O \rightarrow 4H_2 + CO_2$$

$$CH_4 + H_2O \rightarrow 3H_2 + CO$$

The generated anode gas is supplied to the anode 10 of the fuel cell 1 via the anode gas passage 73. Further, the cathode gas (i.e., the gas including the oxygen; air in the case 5) is supplied to the cathode 11 of the fuel cell 1 via the cathode gas passage 70. Accordingly, the fuel cell 1 generates electric power. The exhaust gas with high temperature exhausted from the fuel cell 1 is exhausted to the outside of the case 5 via the combustion exhaust gas passage 75.

The combustion exhaust gas passage 75 is provided with a heat exchanger 76 including a condensing function. The heat exchanger 76 is provided with a passage 78 for pumping the reserved warm water which is connected to a warm water reserving tank 77, and a pump 79 for pumping the reserved warm water is provided at the passage 78 for pumping the reserved warm water. The passage 78 for pumping the reserved warm water includes an outward passage 78a and a return passage 78c. The water in the warm water reserving tank 77 with low temperature is outputted from an outputting port 77p of the warm water reserving tank 77 by an actuation of the pump 79 for pumping the reserved warm water, flows through the outward passage 78a, and reaches the heat exchanger 76 to be heated by a heat exchanging operation of the heat exchanger 76. The water heated at the heat exchanger 76 returns to the warm water reserving tank 77 via a return port 77i by way of the return passage 78c. Thus, the water in the warm water reserving tank 77 is heated to be warm. The vaporized water included in the exhaust gas is condensed at the heat exchanger 76 to be the condensed water. The condensed water is supplied to the water purifier 43, for example, by the gravity via a condensed water passage 42 formed extending from the heat exchanger 76. The water purifier 43 includes a water purification agent 43a, for example, an ion exchange resin, which removes the impurities in the condensed water. The water removed with the impurities is moved to the tank 4 to be reserved therein. When the pump 80 is actuated, the water in the water tank 4 is supplied to the evaporating portion 2 with a high temperature via the water supply passage 8, is vaporized at the evaporating portion 2, is supplied to the reforming portion 3 as the vaporized water, and is consumed in a reforming reaction for reforming the fuel at the reforming portion 3. As shown in Fig. 9, the humidity and temperature sensor 510 is arranged at the position which is unlikely affected by the influence of the temperature of the reformer 2A and the fuel cell 1. Particularly, the humidity and temperature sensor 510 is positioned at the upstream of the source gas passage 6 within the case 5. In a case where the length of a range of the source gas passage 6 from the shut-off valve 69 to the inlet 18i of the electric power generating module 18 is defined as 100, the humidity and temperature sensor 510 may be positioned within a range at a length of 0.1 to 30 from the shut-off valve 69 towards a downstream of the flow, or within a range at a length of 0.1 to 20 from the shut-off valve 69 towards a downstream of the flow. According to the foregoing construction, the humidity and temperature sensor 510 is provided at the upstream relative to the desulfurizer 200, the flow volume sensor 300, and the pump 60 on the source gas passage 6. Thus, the humidity and temperature sensor 510 is at the temperature close to the temperature of the temperature of the outside air.

Further, as shown in Fig. 9, the valve box 580 forming the valve housing chamber 582 for covering the shut-off valve 69 is provided within the case 5. The valve box 580 includes the wall members 581, 583. The wall members 581, 583 may be made from the metal plate or may be made from thermal insulation materials which include low thermal conductivity. As described above, the humidity and temperature sensor 510 is housed in the valve housing camber 582 of the valve box 580 at a bottom portion of the case 5 to be positioned at a downstream of the shut-off valve 69. In those circumstances, the humidity and temperature sensor 510 is provided at the position in which the humidity and temperature sensor 510 is unlikely affected by the temperature of the reformer 2A and the fuel cell 1 so that the temperature of the humidity and temperature sensor 510 remains as low as possible. According to the foregoing construction, the detection precision by the humidity and temperature sensor 510 is assumed to be high. In consequence, the volume of the water vapor flowing from the source gas to the desulfurizer 200 is assumed to be detectable with high precision, and thus the deteriorated amount of the desulfurization agent by the water vapor is assumed to be detectable with high precision.

Thus, precision for determining the lifetime of the desulfurizer 200 and the precision of a command urging the replacement of the desulfurization agent of the desulfurizer 200 are enhanced. Because the air rises upward in the case 5 when the temperature of the air in the case 5 is increased, the valve box 580 is provided at the bottom portion 5b of the case 5 so that the temperature of the air in the case 5 is unlikely to be increased. The valve housing chamber 582 is substantially sealed so that, for example, a gas sensor enables to detect a leakage of the gas at an early stage by restraining the leaked gas from being rarified in a case where the source gas is leaked from the shut-off valve 69. With the construction that the valve housing chamber 582 is the sealed chamber, the heat in the case 5 is restrained from entering the valve housing chamber 582 of the valve box 580. Thus, an increase of the temperature of the humidity and temperature sensor 510 provided in the valve housing chamber 582 of the valve box 580 is restrained. The gas sensor may be positioned in the valve housing chamber 582.

According to this application of the embodiment, the control portion 100X outputs the information regarding the maintenance, for example, the replacement of the desulfurization agent of the desulfurizer 200 to the alarm 102 on the basis of the physical quantity in relation with the temperature and the humidity of the source gas detected by the humidity and temperature sensor 510 and the cumulative flow volume of the source gas which flows into the desulfurizer 200 from the reference timing to the current timing.

The present invention is not limited to the constructions of the embodiments and the application examples shown in drawing figures, and can be modified within a range of the scope of the invention. The fuel cell is not limited to the solid oxide fuel cell (SOFC). Alternatively, a polymer electrolyte fuel cell, a phosphoric acid fuel cell (PAFC), and a molten-carbonate fuel cell (MCFC) may be applied as the fuel cell. Namely, as long as including a desulfurizer for desulfurizing the fuel, any fuel cell system is applicable. The types of fuel (source gas, source fuel gas) are not limited, and any gas including the sulfur component as an odorant, for example, town gas, propane gas, biogas, liquid petroleum gas (LPG), and compressed natural gas (CNG) are applicable.

## Claims

**1.** A fuel cell system, comprising:

a reformer (2A) for forming an anode gas, which includes hydrogen, by reforming a source gas;
a fuel cell (1) including an anode to which the anode gas is supplied and a cathode to which a cathode gas is supplied;
a source gas passage (6) for supplying the source gas to the reformer (2A);
a shut-off valve (69) for closing the source gas passage (6);
a desulfurizer (200, 100) provided at the source gas passage (6) for removing sulfur component included in the source gas; and
a humidity and temperature sensor (510) provided at the source gas passage (6) for detecting a physical quantity in association with a temperature and a humidity of the source gas to be supplied to the desulfurizer (200, 100),
**characterized by**
a case (5) for housing the reformer (2A), the fuel cell (1) and the desulfurizer (200, 100); and a valve box (580) forming a valve housing chamber (582) covering the shut-off valve (69), the valve box (580) being provided within the case (5) at a bottom portion (5b) of the case (5); wherein
the humidity and temperature sensor (510) is housed in the valve housing chamber (582) of the valve box (580) so as not to be affected by the temperature of the reformer (2A) and/or the fuel cell (1).

**2.** The fuel cell system according to claim 1, further comprising:

a flow volume sensor (300) detecting a flow volume of the source gas which flows through the source gas passage (6);
a control portion (100X); wherein
the control portion (100X) outputs the information regarding a maintenance of the desulfurizer (200, 100) on the basis of the physical quantity in association with the temperature and the humidity of the source gas detected by the humidity and temperature sensor (510) and a cumulative flow volume of the source gas flowing into the desulfurizer (200, 100) after a reference timing.

## Patentansprüche

**1.** Brennstoffzellensystem, mit:

einem Reformer (2A) zum Ausbilden eines Anodengases, das Wasserstoff einschließt, durch Reformieren eines Ursprungsgases;
einer Brennstoffzelle (1), die eine Anode, der das Anodengas zugeführt wird, und eine Kathode aufweist, der ein Kathodengas zugeführt wird;
einem Ursprungsgasdurchgang (6) zum Zuführen des Ursprungsgases zum Reformer (2A);
einem Absperrventil (69) zum Schließen des Ursprungsgasdurchgangs (6);
einem Entschwefeler (200, 100), der am Ursprungsgasdurchgang (6) zum Entfernen eines Schwefelbestandteils, der im Ursprungsgas enthalten ist, vorgesehen ist; und
einem Feuchtigkeits- und Temperatursensor (510), der am Ursprungsgasdurchgang (6) zum Erfassen einer physikalischen Größe in Zusammenhang mit einer Temperatur und einer Feuchtigkeit des Ursprungsgases vorgesehen ist, das dem Entschwefeler (200, 100) zuzuführen ist,
**gekennzeichnet durch**
ein Gehäuse (5) zur Unterbringung des Reformers (2A), der Brennstoffzelle (1) und des Entschwefelers (200, 100); und einen Ventilkasten (580), der eine Ventilunterbringungskammer (582) ausbildet, die das Absperrventil (69) abdeckt, wobei der Ventilkasten (580) innerhalb des Gehäuses (5) an einem Bodenabschnitt (5b) des Gehäuses (5) vorgesehen ist; wobei
der Feuchtigkeits- und Temperatursensor (510) so in der Ventilunterbringungskammer (582) des Ventilkastens (580) untergebracht ist, dass er durch die Temperatur des Reformers (2A) und/oder der Brennstoffzelle (1) nicht beeinträchtigt wird.

**2.** Brennstoffzellensystem nach Anspruch 1, mit zudem:

einem Durchflussvolumensensor (300), der ein Durchflussvolumen des Ursprungsgases erfasst, das durch den Ursprungsgasdurchgang (6) strömt;
einem Steuerungsabschnitt (100X); wobei
der Steuerungsabschnitt (100X) auf der Grundlage der physikalischen Größe in Zusammenhang mit der Temperatur und der Feuchtigkeit des Ursprungsgases, die vom Feuchtigkeits- und Temperatursensor (510) erfasst wird, und einem kumulierten Durchflussvolumen des Ursprungsgases, das nach einem Referenzzeitpunkt in den Entschwefeler (200, 100) strömt, die Information über eine Wartung des Entschwefelers (200, 100) ausgibt.

## Revendications

**1.** Système de pile à combustible comprenant :

un reformeur (2A) pour former un gaz d'anode, qui contient de l'hydrogène, par reformage d'un gaz source ;
une pile à combustible (1) comprenant une anode à laquelle le gaz d'anode est fourni et une cathode à laquelle un gaz de cathode est fourni ;
un passage de gaz source (6) pour fournir le gaz source au reformeur (2A) ;
une soupape d'arrêt (69) pour fermer le passage de gaz source (6) ;
un désulfurant (200, 100) disposé au niveau du passage de gaz source (6) pour éliminer le composant soufré inclus dans le gaz source ; et
un capteur d'humidité et de température (510) disposé au niveau du passage de gaz source (6) pour détecter une quantité physique en association avec la température et l'humidité du gaz source devant être fourni au désulfurant (200, 100),
**caractérisé par**
un boîtier (5) pour loger le reformeur (2A), la pile à combustible (1) et le désulfurant (200, 100) ; et une boîte à soupape (580) formant une chambre de logement de soupape (582) couvrant la soupape d'arrêt (69), la boîte à soupape (580) étant disposée à l'intérieur du boîtier (5) au niveau d'une partie de fond (5b) du boîtier (5) ;
dans lequel le capteur d'humidité et de température (510) est logé dans la chambre de logement de soupape (582) de la boîte à soupape (580) de façon à ne pas être affecté par la température du reformeur (2A) et/ou de la pile à combustible (1).

**2.** Système de pile à combustible selon la revendication 1, comprenant en outre :

un capteur de volume d'écoulement (300) détectant le volume d'écoulement du gaz source qui s'écoule à travers le passage de gaz source (6) ;
une partie de commande (100X) ;

dans lequel la partie de commande (100X) délivre en sortie des informations concernant la maintenance du désulfurant (200, 100) sur la base de la quantité physique en association avec la température et l'humidité du gaz source détectées par le capteur d'humidité et de température (510) et un volume d'écoulement cumulatif du gaz source s'écoulant dans le désulfurant (200, 100) après un temps de référence.

# FIG. 1

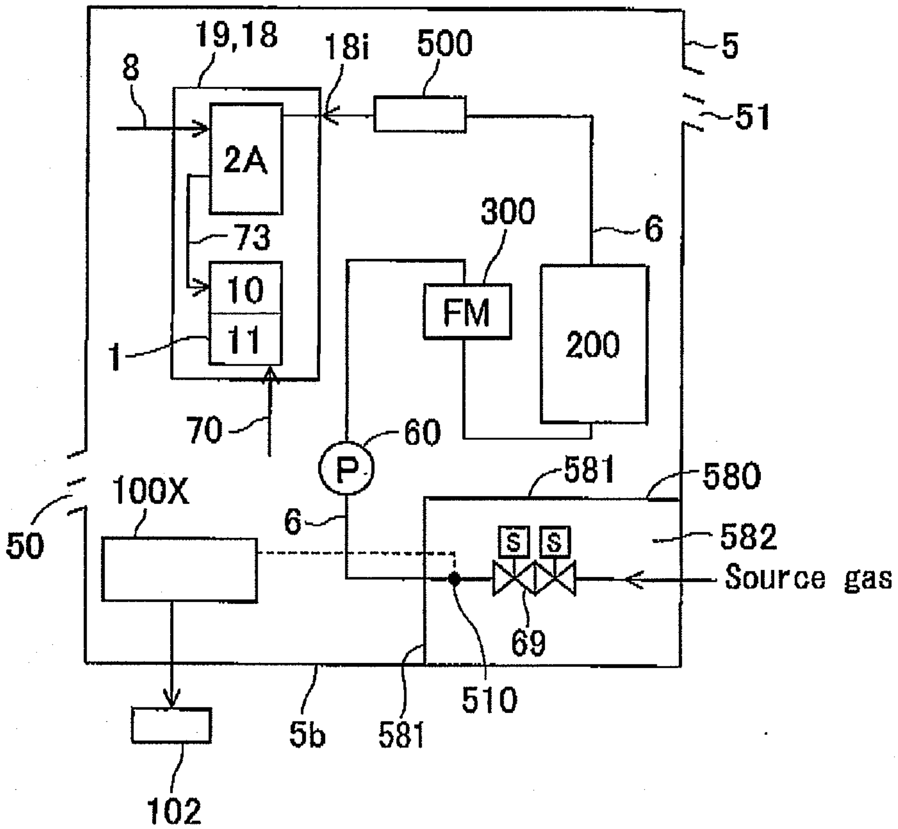
19,18
18i
500
5
8
51
2A
300
73
6
10
FM
200
1
11
70
60
P
581
580
100X
50
6
582
S
S
Source gas
69
510
5b
581
102

FIG. 2

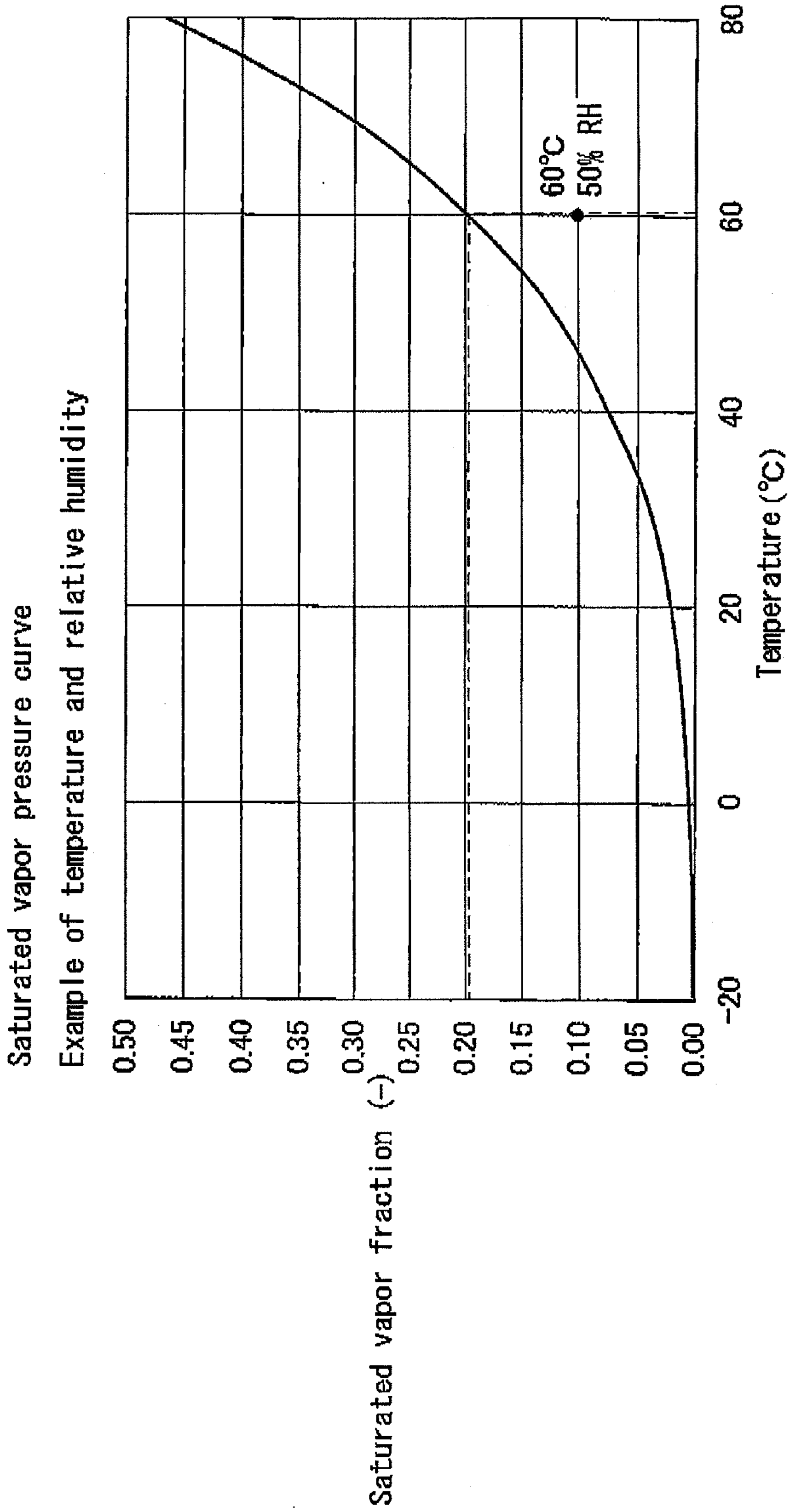
Saturated vapor pressure curve
Example of temperature and relative humidity
Saturated vapor fraction (−)
0.50
0.45
0.40
0.35
0.30
0.25
0.20
0.15
0.10
0.05
0.00
−20
0
20
40
60
80
Temperature (°C)
60°C
50% RH

FIG. 3

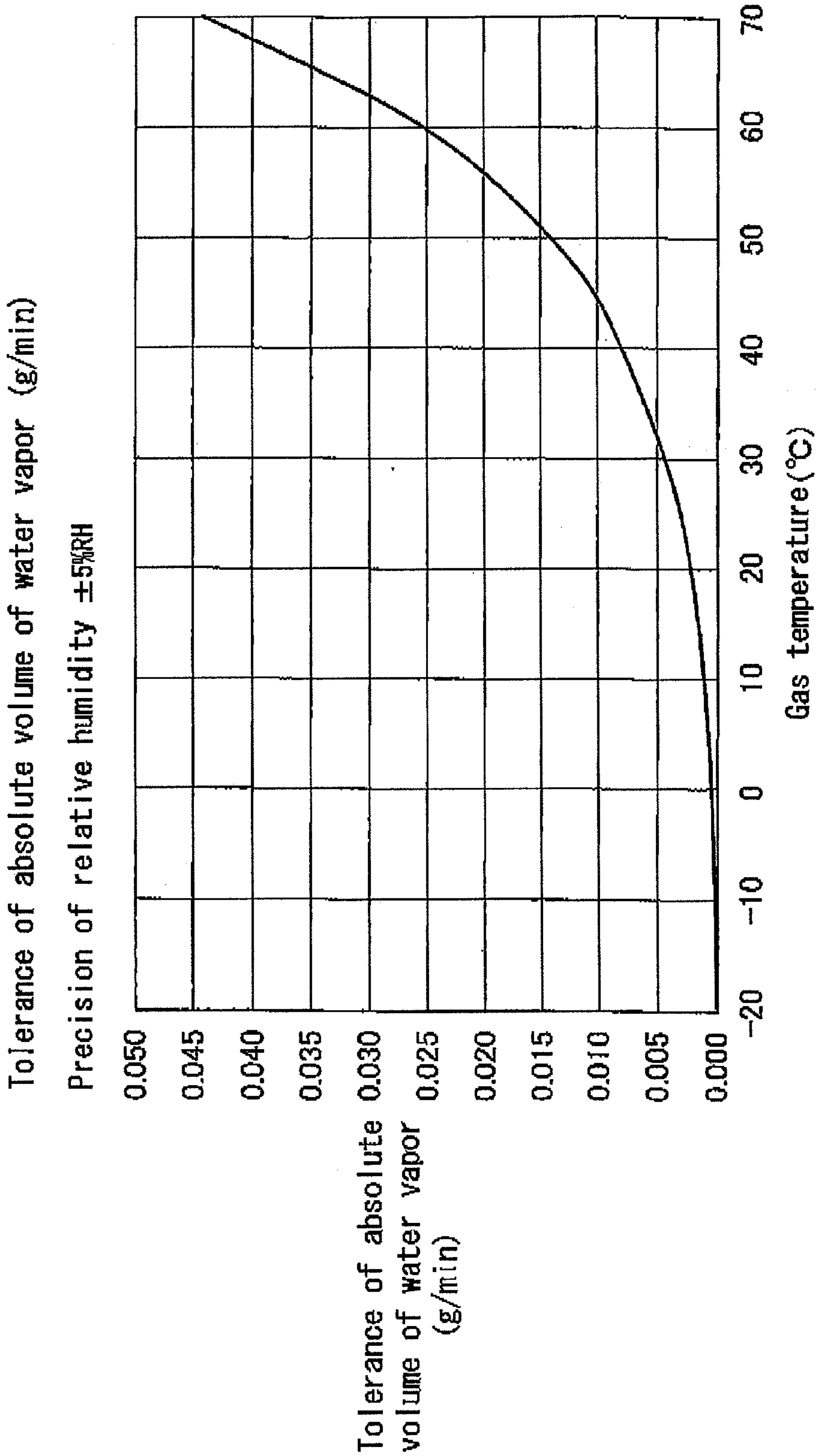
Tolerance of absolute volume of water vapor (g/min)
Precision of relative humidity ±5%RH
Tolerance of absolute volume of water vapor (g/min)
0.050
0.045
0.040
0.035
0.030
0.025
0.020
0.015
0.010
0.005
0.000
-20
-10
0
10
20
30
40
50
60
70
Gas temperature(°C)

FIG. 4

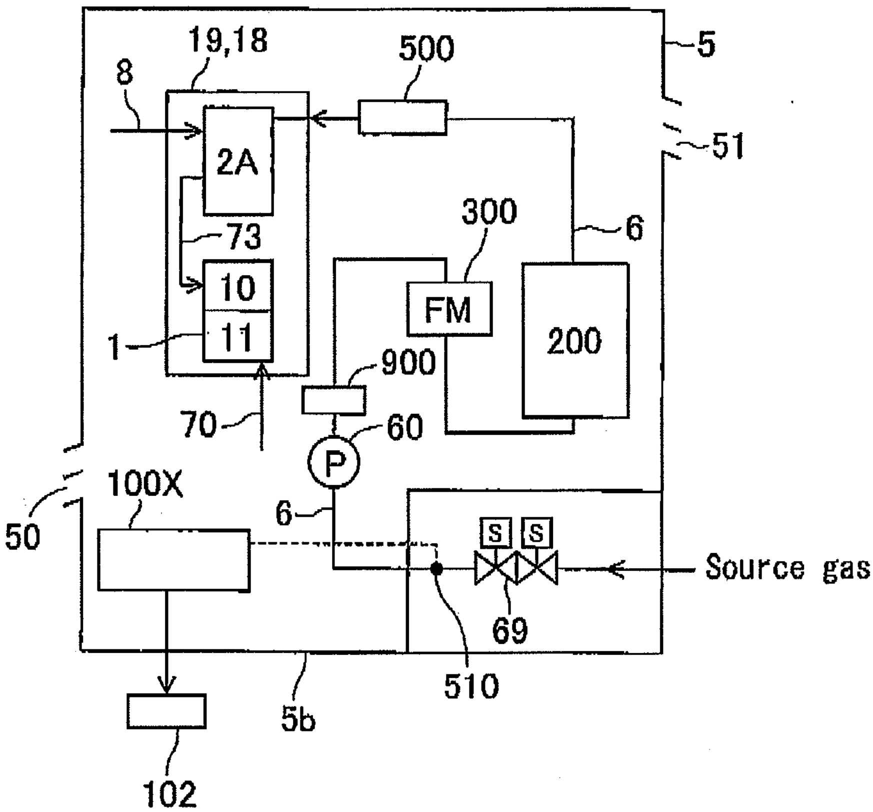
19,18
500
5
8
2A
51
73
300
6
10
FM
200
1
11
900
70
60
P
100X
6
50
S
S
Source gas
69
510
5b
102

FIG. 5

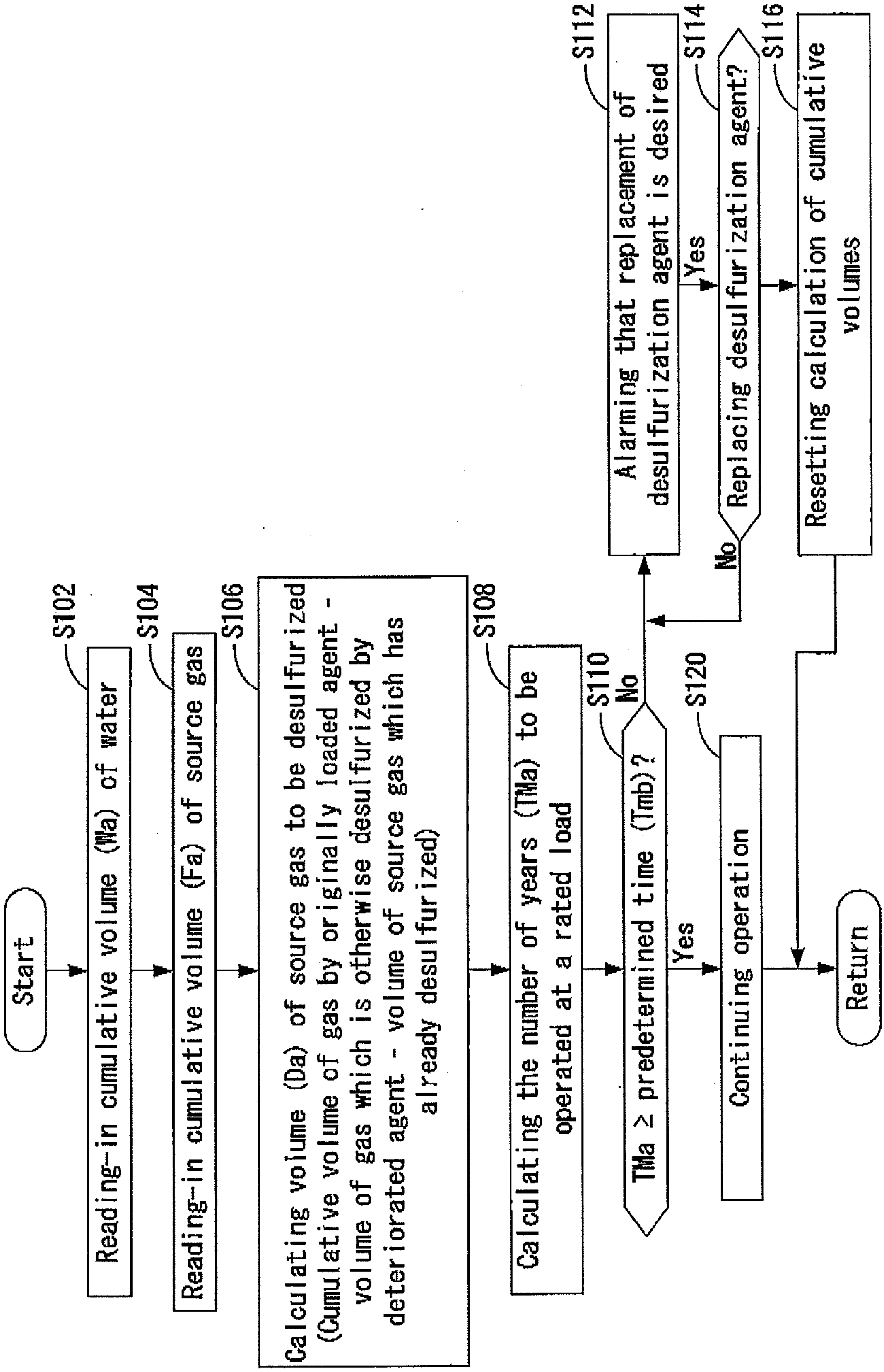
Start
S102
Reading-in cumulative volume (Wa) of water
S104
Reading-in cumulative volume (Fa) of source gas
S106
Calculating volume (Da) of source gas to be desulfurized (Cumulative volume of gas by originally loaded agent - volume of gas which is otherwise desulfurized by deteriorated agent - volume of source gas which has already desulfurized)
S108
Calculating the number of years (TMa) to be operated at a rated load
S110
TMa ≥ predetermined time (Tmb)?
Yes
No
S112
Alarming that replacement of desulfurization agent is desired
S114
Replacing desulfurization agent?
Yes
No
S116
Resetting calculation of cumulative volumes
S120
Continuing operation
Return

FIG. 6

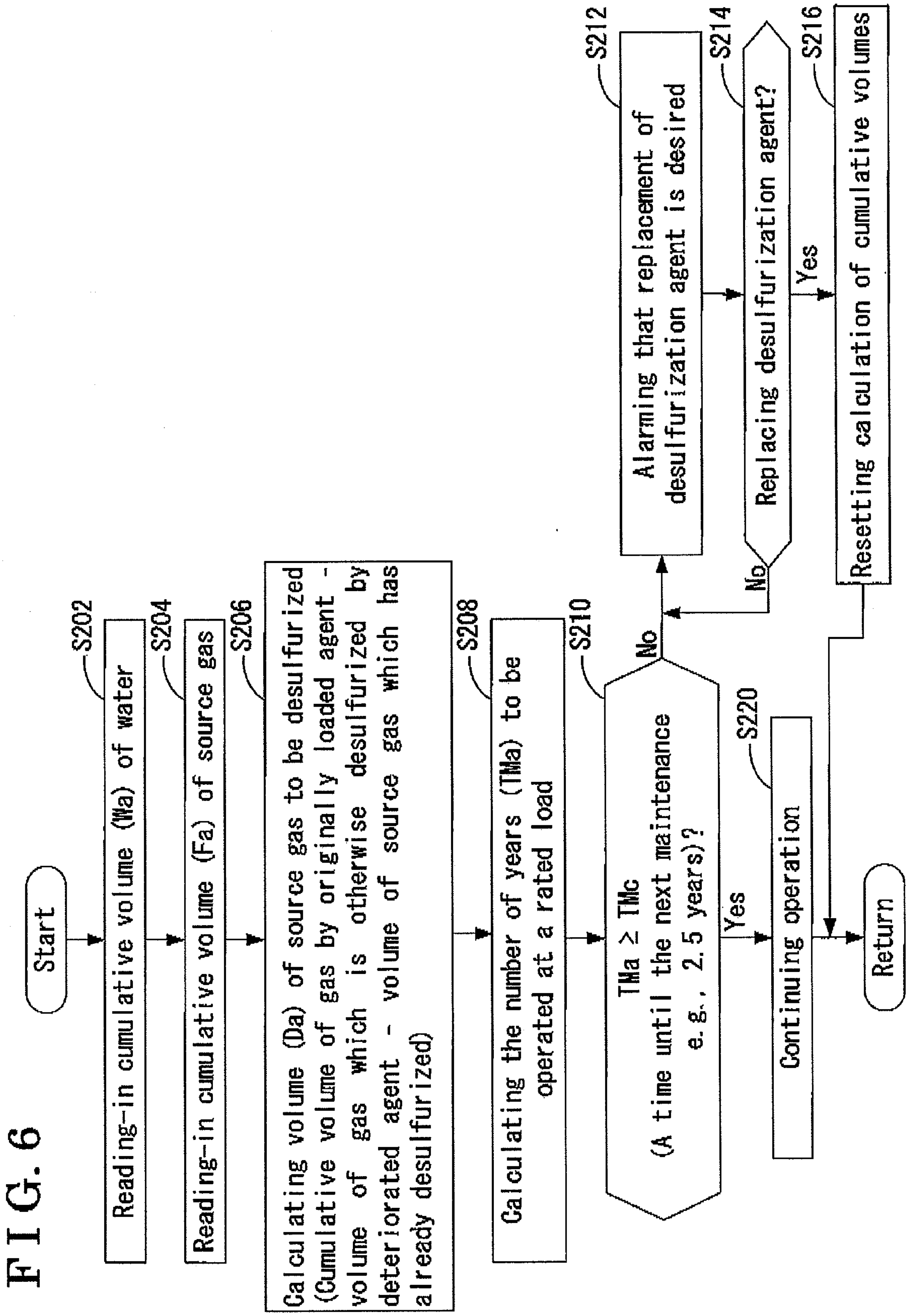
Start
Reading-in cumulative volume (Wa) of water
S202
Reading-in cumulative volume (Fa) of source gas
S204
Calculating volume (Da) of source gas to be desulfurized (Cumulative volume of gas by originally loaded agent - volume of gas which is otherwise desulfurized by deteriorated agent - volume of source gas which has already desulfurized)
S206
Calculating the number of years (TMa) to be operated at a rated load
S208
TMa ≥ TMc (A time until the next maintenance e.g., 2.5 years)?
S210
Yes
No
Continuing operation
S220
Alarming that replacement of desulfurization agent is desired
S212
Replacing desulfurization agent?
S214
Yes
No
Resetting calculation of cumulative volumes
S216
Return

FIG. 7

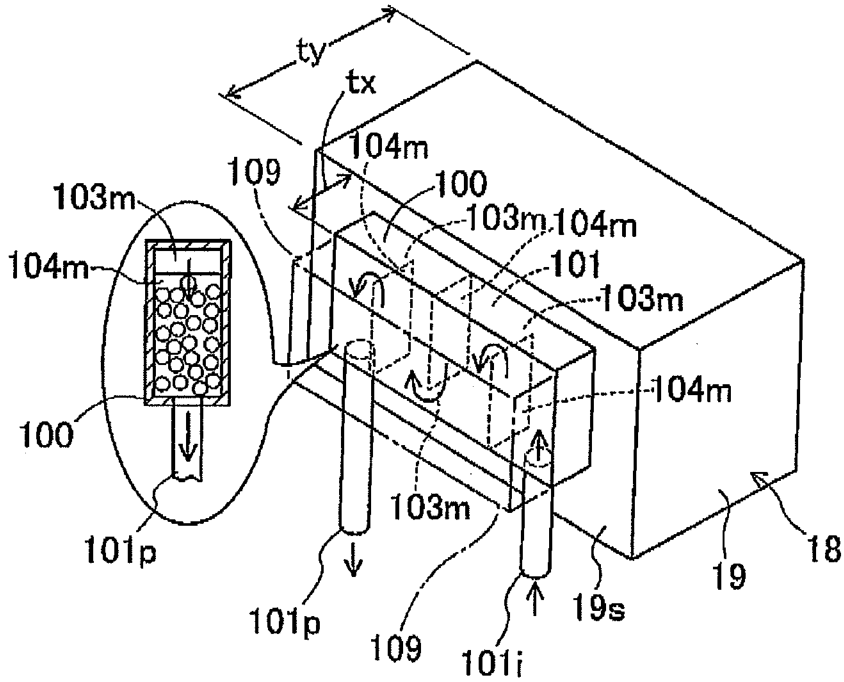
ty
tx
104m
109
100
103m
104m
101
103m
104m
100
101p
103m
101p
109
101i
19s
19
18

FIG. 8

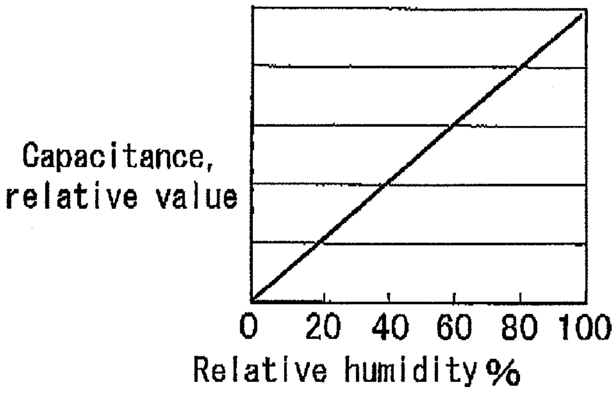
Capacitance, relative value
0
20
40
60
80
100
Relative humidity %

FIG. 9

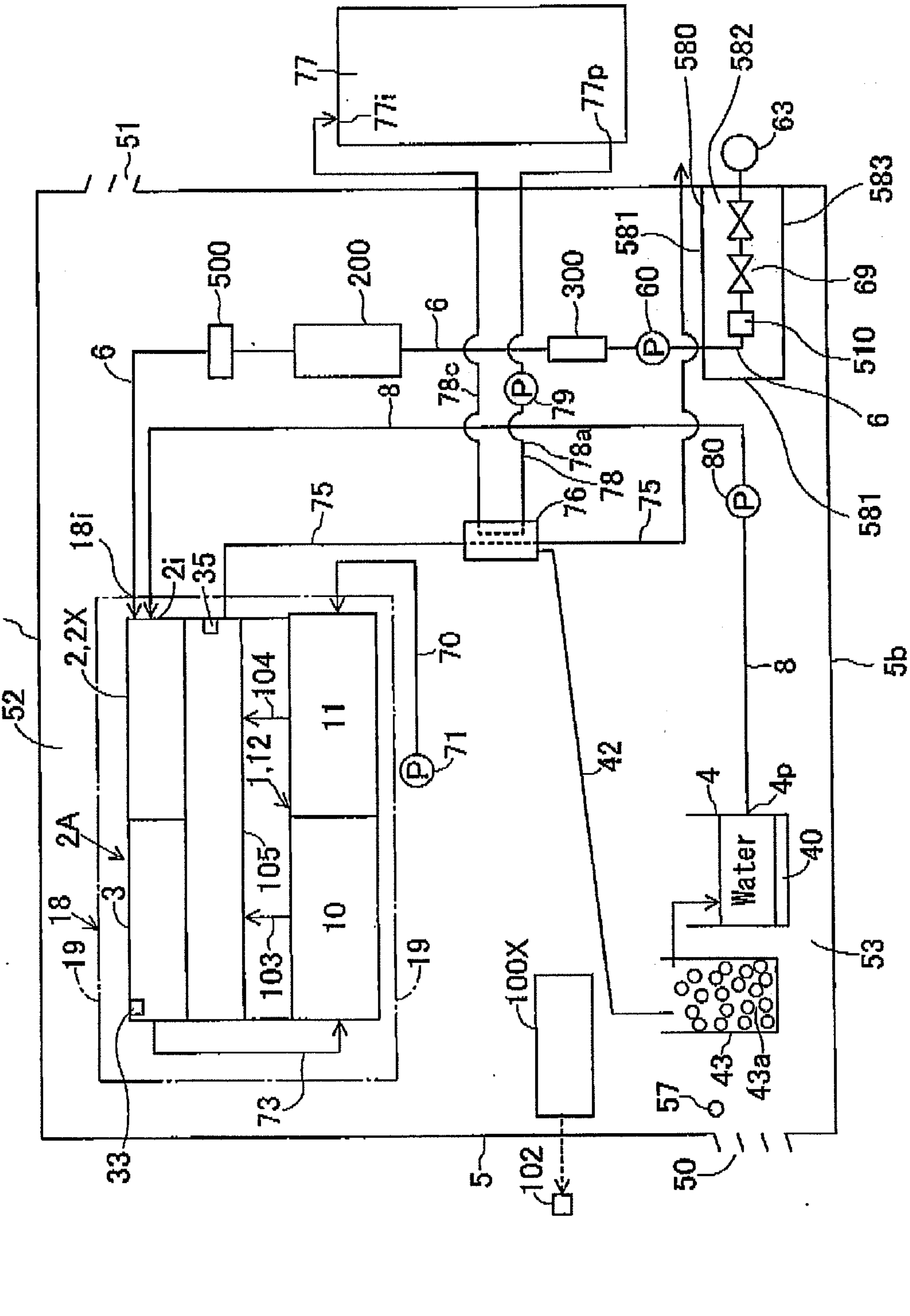

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003109640 A
- JP 2006111766 A
- JP 2006265480 A
- JP 2010260772 A